(19) **Europäisches Patentamt European Patent Office Office européen des brevets**

(11) **EP 2 081 447 B1**

(12) **EUROPEAN PATENT SPECIFICATION**

(45) Date of publication and mention of the grant of the patent:
**02.01.2019 Bulletin 2019/01**

(21) Application number: **07839058.0**

(22) Date of filing: **27.09.2007**

(51) Int Cl.:
*A23L 27/40* *(2016.01)*    *A23L 27/00* *(2016.01)*

(86) International application number:
**PCT/US2007/021022**

(87) International publication number:
**WO 2008/039533 (03.04.2008 Gazette 2008/14)**

(54) **SEASONING AND METHOD FOR ENHANCING AND POTENTIATING FOOD FLAVOR UTILIZING MICROENCAPSULATION WHILE REDUCING DIETARY SODIUM INTAKE**

WÜRZMITTEL UND VERFAHREN ZUR VERSTÄRKUNG UND POTENZIERUNG VON NAHRUNGSMITTELGESCHMACK MITTELS MIKROVERKAPSELUNG UNTER GLEICHZEITIGER REDUKTION DER NATRIUMAUFNAHME MIT DER NAHRUNG

ASSAISONNEMENT ET PROCÉDÉ D'AMÉLIORATION ET DE RENFORCEMENT DES SAVEURS ALIMENTAIRES PAR MICROENCAPSULATION, ASSOCIÉS À UNE RÉDUCTION DE L'APPORT EN SODIUM PAR L'ALIMENTATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.09.2006 US 847739 P**
**27.09.2006 US 847725 P**

(43) Date of publication of application:
**29.07.2009 Bulletin 2009/31**

(73) Proprietor: **Givaudan SA**
**1214 Vernier (CH)**

(72) Inventors:
• **SMITH, Gordon**
**Omaha, NE 68118 (US)**
• **JENSEN, Michael**
**Omaha, NE 68102 (US)**

(74) Representative: **Hamer, Christopher K. et al**
**Mathys & Squire LLP**
**The Shard**
**32 London Bridge Street**
**London SE1 9SG (GB)**

(56) References cited:
US-A- 4 068 006        US-A- 4 385 076
US-A- 4 515 769        US-A- 5 139 794
US-A- 5 298 268        US-A- 5 425 956
US-A1- 2005 191 389    US-A1- 2005 238 788

## Description

### BACKGROUND

While utilizing seasonings, such as salt, on food with aqueous surfaces, the seasoning may dissociate. For example, salts, such as sodium chloride and potassium chloride, are composed of molecules consisting of anions (sodium) and cations (chlorine) that are bonded together by their negative and positive charges, respectively. These bonds are ionic bonds. Compounds with ionic bonds may easily dissociate separating into individual cations and anions when in water.

There remains the need for a seasoning that has flavor and organoleptic properties similar to sodium chloride that can be applied to foods with aqueous surfaces or properties while preventing dissociation and reducing and/or maintaining the amount of sodium or other flavorants needed for a desired salty taste.

US 2005/0191389 discloses a flavoring matrix comprising a flavoring (such as spice oleoresins and oils) or seasoning (comprising such flavorings) together with an edible, meltable matrix made from food polymers, and wherein the flavoring matrix is in the form of a sheet.

US 4,385,076 is concerned with water-free flavor-enhancing liquid fat compositions comprising 90 to 99% by weight of an edible liquid fat and a flavor-enhancing amount of non-encapsulated microfine particles.

### SUMMARY

The disclosure is directed to encapsulated seasoning particles for food products, whereby the encapsulated seasoning particles preserve, enhance and potentiate taste impact of the food product, while effectively reducing dietary sodium intake. More specifically, the invention is directed to a microcapsule of seasoning as defined in Claim 1 appended hereto, as well as a food seasoning comprising the same and a method of seasoning a food product which employs the microcapsule of seasoning. The microcapsule of seasoning comprises a core, the core comprising at least one salt particle and a non-aqueous composition, each salt particle having a size less than 25 microns. The core is encapsulated with at least one shell which may consist of a hydrophobic compound to prevent dissolution of the salt particle in the core by an aqueous solution. Further, the encapsulated core may be mononuclear, polynuclear, or may consist of a homogenously distributed matrix.

### BRIEF DESCRIPTION OF THE DRAWINGS

The numerous advantages of the disclosure may be better understood by those skilled in the art by reference to the accompanying figures in which:

FIG. 1 is a cross-sectional side elevation view illustrating an encapsulated seasoning particle, wherein the core has been encapsulated with a layer or shell of encapsulating material;

FIG. 2 is a partial isometric view of the encapsulated seasoning particle illustrated in FIG. 1, wherein a portion of the encapsulating layer or shell has been cut away to show the core;

FIG. 3 is a cross-sectional side elevation view of a core including multiple seasoning particles and a non-aqueous composition encapsulated by a shell;

FIG. 4 is a cross-sectional side elevation view of a core in a matrix form with a shell encapsulating the core;

FIG. 5 is a cross-sectional side elevation view illustrating an encapsulated seasoning particle, wherein a core including multiple seasoning particles suspended in a non-aqueous composition has been encapsulated by multiple shells;

FIG. 6 is a cross-sectional side elevation view of a core including multiple non-uniform seasoning particles and a non-aqueous composition encapsulated by a shell;

FIG. 7 is a model dose-response curve for comparing responses for given concentrations of tastant A; and

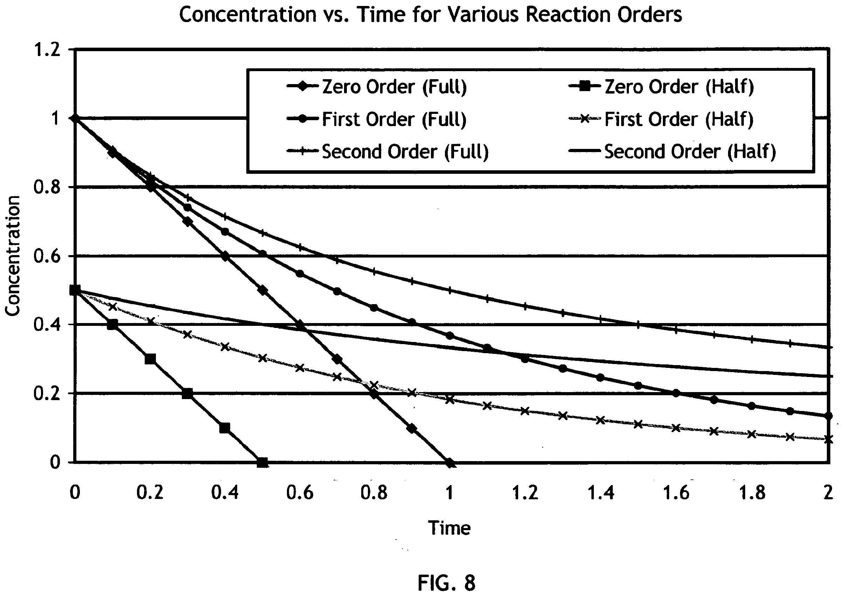

FIG. 8 is a model concentration versus time graph for a zero order reaction, a first order reaction, and a second order reaction for two initial concentrations of a given solute.

### DETAILED DESCRIPTION

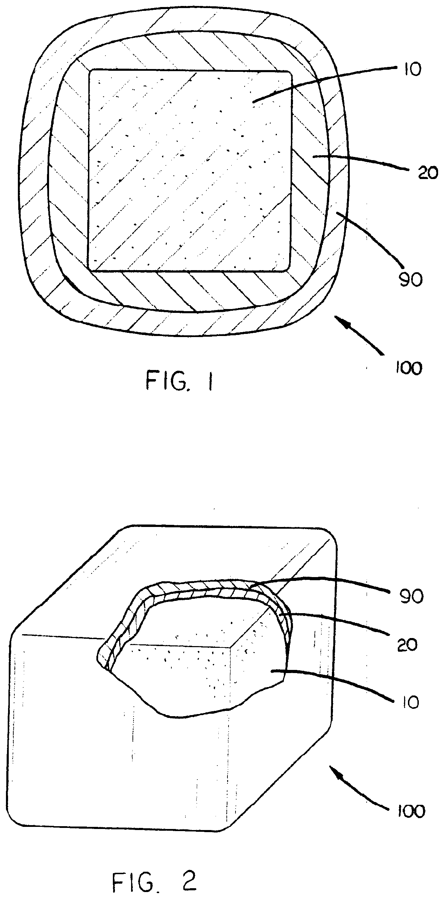

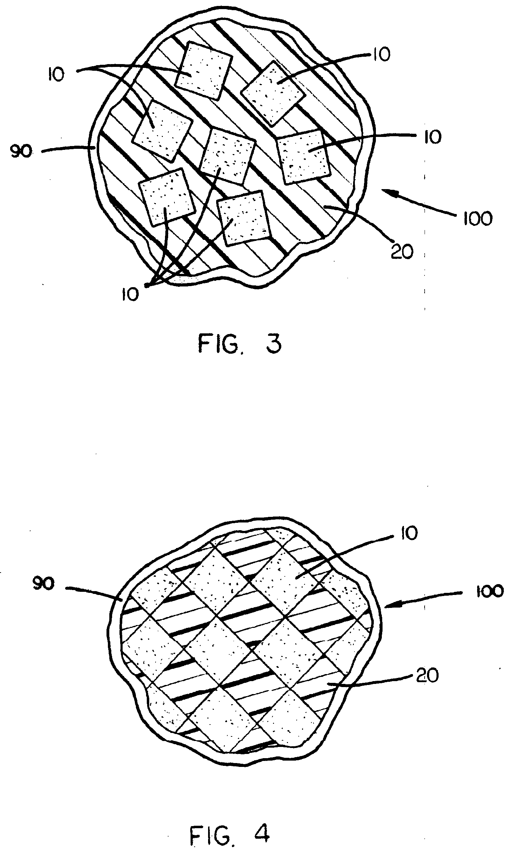

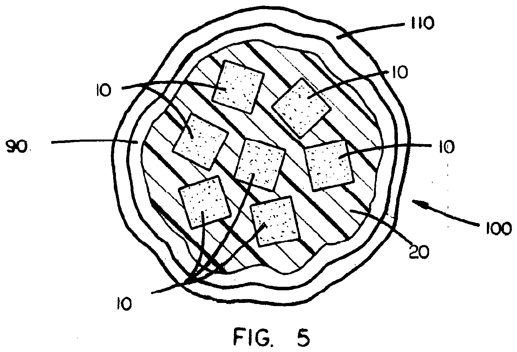

Referring generally to FIGS. 1 through 7, an encapsulated seasoning particle 30 for at least one of preserving, potentiating and enhancing food flavor is described herein. Microencapsulation is a process in which particles or droplets, generally in the range of microns, may be surrounded by a coating to produce small capsules with many useful properties. Herein, encapsulation refers to microencapsulation. In its simplest form, a microcapsule may be a small sphere with a layer and/or wall around it. The material inside the microcapsule is referred to herein as the core (and may also be referred to as an internal phase or fill) and the wall is referred to herein as a shell (and may also be referred to as a coating or membrane). The core may include solids, liquids, or a combination of solids and liquids. When the core includes a combination of solids and liquids, a suspension agent , such as lecithin, may be used. The core may be spherical, cubical, or a variety of other shapes, uniform and nonuniform. Similarly, the shell may be spherical, cubical, or a variety of other shapes, both uniform and nonuniform. Most microcapsules have diameters between a few micrometers and a few millimeters. Examples of microcapsules in nature may include things such as seeds, fruits, vegetables, and on a smaller level, living cells. Food products utilizing the encapsulated seasoning may include snack foods, such as peanuts, pretzels, popcorn, and potato chips; meat products, such as beef, pork, chicken, and poultry;

cheese products in liquid, solid, and semi-solid states; slurries, such as tomato sauce, ketchup, spaghetti sauce, gravy, and the like. Seasonings that may be suitable for encapsulation may include, salt, sugar, pepper, cumin, thyme, a variety of seasoning salts, paprika, nutmeg, chili powder, basil, ginger, garlic, tumeric, coriander, lemon pepper, curry, cilantro, allspice, oil-soluble flavorings, as well as other various seasonings, spices and flavorings. In accordance with the present invention, at least one salt particle is included in the core as a seasoning.

Encapsulation presents many benefits, including protection of an unstable material from its environment and enhancement of product shelf-life by preventing dissolution or degradation; controlled or timed release; the ability to add multiple flavorings; and/or the ability to handle liquids as solids. Many seasonings, including sodium chloride, are water soluble and dissociate in an aqueous solution. In many instances, it is preferable to prevent particles of sodium chloride or other seasonings from dissociating to preserve a concentrated taste impact. Additionally, it may be desirable to control the release of the seasoning until it reaches the palate, which may allow distinction from larger crystal salt. Further, it may be desirable to utilize encapsulation of a core of seasoning in a suspension instead of direct encapsulation of the seasoning. Encapsulation provides a method for attaining these objectives.

In an embodiment, a mononuclear seasoning capsule may comprise one core encapsulated by a shell. An encapsulated seasoning particle 100 is added as part of a food slurry and consists of a core 10 encapsulated with a layer or shell 20 of fat, oil, or other non-aqueous food product. For instance, the encapsulated seasoning particle 100 may include a core, including at least one seasoning particle 10 less than 25 microns in size and a non-aqueous composition 20 encapsulated in a shell 90 of oil. The core may include at least one seasoning crystal, at least one jagged adsorbent particle, an emulsion, a suspension of solids, or a suspension of smaller microcapsules. An advantageous reason for utilizing microfine seasoning particles is that microfine seasoning particles may increase the overall surface area of the salt in comparison to the same volume of a larger particle salt. Further, microfine seasoning particles may increase the surface area coverage of food as well as the surface area coverage of the tongue and palate. For example, an encapsulated seasoning particle 100 including a core of multiple sodium chloride particles having a size less than 25 microns suspended in a cooking oil may be dispersed to a slurry of ketchup at a stage at the end of the manufacturing process and before bottling and packaging. Additionally, the encapsulated seasoning particle 100 may be introduced to the ketchup before the ketchup product is processed, in the same manner table salt (i.e., sodium chloride) is frequently utilized. It will be appreciated that the encapsulated seasoning particle 100 may include various ingredients and be added to a variety of food products in a variety of ways without departing from the scope and intent of the disclosure.

An encapsulated seasoning particle 100 may be made available to the taste buds when the shell 90 is broken down. Mechanisms that break down the shell 90 may include physical rupturing, such as through chewing; dissolution of the shell wall; a phase change in the shell wall, such as through melting; and/or diffusion of material through the shell wall. For purposes of the disclosure, a frequent mechanism of breaking down the shell 90 may be physical rupture by chewing, although it will be appreciated that the mechanism of breaking down the shell 90 may occur in a variety of ways without departing from the scope and intent of the disclosure.

Moreover, it is possible that a seasoning particle may be encapsulated by multiple shells 90. Multiple layers of encapsulation may provide different functions, such as delivering different flavorings or providing a timed release mechanism. An encapsulated seasoning particle 10 may consist of a core, a first shell 90, and a second shell 110. Multiple layers may be useful for providing extra protection for the core. For example, a core may be encapsulated by a first layer 90 of butter and a second layer 110 of hardened fat. This approach may be useful when the encapsulated seasoning particle 100 may be exposed to a temperature between the melting point of the hardened fat and the butter. The butter layer may melt while the hardened fat layer remains solid because of the higher melting point of the hardened fat layer. The first layer of butter may give a more desirable taste than the hardened fat layer, but the hardened fat layer may be more resistant to melting. This may result in an encapsulated seasoning particle 100 that delivers a desirable taste while protecting the core. Further, the encapsulated seasoning particle is not necessarily limited to two encapsulating layers. More than one or two encapsulating layers may be utilized.

A polynuclear microcapsule of seasoning is disclosed. The shell may block an undesired taste in some food substances. An encapsulated seasoning particle 100 may include multiple cores, including different seasonings, and a shell 90. For example, multiple cores, including at least one core of potassium chloride and at least one core of sodium chloride, may be encapsulated by a shell 20 of cooking oil. The cooking oil may initially mask the bitter taste of the potassium chloride core(s) while the sodium chloride core(s) may deliver a salty taste perception. Utilizing multiple cores, for example at least one sodium chloride core and at least one potassium chloride core, may be beneficial for different reasons, such as reducing sodium intake while delivering a salty taste perception. The encapsulated potassium chloride seasoning 100 may be a polynuclear microcapsule because there may be multiple cores as a result of the manufacturing process. A seasoning particle 10 may take on a variety of shapes not limited to those listed previously.

An encapsulated seasoning particle 100 in a matrix form may include a seasoning particle 10 distributed homogenously throughout the non-aqueous composition 20 and encapsulated by the shell 90. It will be appreciated that an encapsulated seasoning particle 100 may be utilized in a variety of ways. The encapsulated seasoning particle 100 and seasoning particle 10 may take on a variety of shapes not limited to those listed previously.

Further, it may be desirable to utilize encapsulation with a core of seasoning in a solution instead of a solid. While there are many reasons for particle encapsulation, it may be desirable to encapsulate water soluble materials, such as salt crystals, with hydrophobic compounds or compounds that are impervious to water to deliver small particle salts that have greater saltiness perception. This may be accomplished by aqueous phase separation, which is "oil-in-water" encapsulation. An oil/seasoning slurry may be encapsulated by materials such as gelatin, proteins, carbohydrates, oils and/or fats. Release of the salt may be dependent on shear force or pressure, such as chewing food.

The use of a encapsulated seasoning particle may be beneficial because it reduces the amount of seasoning, often including sodium, required for a desired taste impact in comparison to an amount of seasoning that would provide the same taste impact with a larger particle size. For example, sodium intake may be reduced by utilizing small particle sodium chloride, which delivers a greater taste impact than the same mass of larger particle sodium chloride. The utilization of small particle salt as a means of reducing sodium amounts in various food products while potentiating or enhancing an equivalent "salt impact" is based on the integrity of the salt crystals, which is dependent on the absence of its solvation in an aqueous medium. Cores utilizing small seasoning particles 10, such as salt crystals, may be encapsulated within foodgrade compound shells 90 that prevent the dissociation of sodium chloride, potassium chloride, salt mixtures containing these, and/or other seasoning mixtures. This would allow the application of this technology to aqueous food systems. This may include major food categories including canned goods, baked goods, seasoned meats, fried foods, pastas, vegetables, fruits, or any other food that is seasoned with salt or other seasonings and it is desirable to lower sodium content without significantly altering desired saltiness taste perception.

An encapsulated seasoning particle 100 may be used for at least one of flavoring and preserving a food product and may comprise a first encapsulated seasoning component, including a salt, and a second encapsulated seasoning component selected for at least one of complementing the first encapsulated seasoning component and reducing the amount of the first encapsulated seasoning component required for producing a desired flavor of the food product. For instance, the desired flavor may be a true salty flavor, such as from sodium chloride. The first encapsulated seasoning component and the second encapsulated seasoning component have a particle size of less than 25 microns or minus 500 U.S. mesh.

Particle size refers to the size of a seasoning particle disposed in the core encapsulated by a shell 90. The term "particle" may refer to a crystalline or lattice structure, regular three dimensional shapes (referring to coordination geometry), and irregular shapes having no predefined or specific particle orientation or geometry. The particle size may be evaluated through use of a particle analyzer. For example, a Malvern Laser Particle Size Analyzer or an optical particle image analyzer may be used to obtain a particle size.

The core of the encapsulated seasoning particle 100 may include various seasonings provided that the core comprises at least one salt particle in accordance with the invention. The first encapsulated seasoning component may include at least one of sodium chloride and potassium chloride. For example, the first encapsulated seasoning component may be sodium chloride having a particle size such that when included with the second encapsulated seasoning component, the particle size of the combination is less than 25 microns. The food seasoning may further comprise a second encapsulated seasoning component selected for at least one of complementing the taste impact of the first encapsulated seasoning component and reducing the amount of the first encapsulated seasoning component required for producing the desired taste impact. The second seasoning component may include at least one of potassium chloride, a sea salt, a bulking agent, and a bitterness masking agent. For instance, the second seasoning component may be is potassium chloride, which may additionally include a bitterness masking agent commonly used in the art. The bitterness masking agent may be any additive commonly used in the art to at least one of mask, inhibit, and mitigate the bitter sensation associated with potassium chloride. An exemplary bitterness masking agent is trehalose, as disclosed in U.S. Patent Application No. 20060088649 and U.S. Patent No. 6,159,529. While only sodium chloride elicits a true salt taste, it is foreseeable that an amount of potassium chloride may be used to complement the flavor of sodium chloride, while reducing the dietary intake of sodium. Because the potassium chloride may impart a bitter flavor to the mixture, however, a bitterness masking agent may be utilized to mitigate the bitter flavor.

As described above, the second encapsulated seasoning component may include a bulking agent. The bulking agent may be utilized to further reduce the amount of the first seasoning component required to impart the desired flavor. The bulking agent may comprise starch, maltodextrin, dextrose, another starch derivative, or another suitable bulking agent which should not adversely affect the flavor and organoleptic properties of the first encapsulated seasoning component.

Until recently, salt was considered simply a necessary and basic commodity. However, different varieties of salt have lately been utilized by cooks and chefs - including sea salt - to add gourmet flavor to foods. Sea salt has many purported health benefits and is often portrayed as being superior to table salt. Sea salt may contain sodium chloride, potassium chloride, magnesium, calcium, sulfates, and/or other minor constituents. An additional advantage of sea salt is the various flavors and varieties that may be available. In accordance with the present invention, an encapsulated seasoning particle 100 has a core, having at least one seasoning salt particle 10 with a particle size less than 25 microns and a non-aqueous composition 20, and is surrounded or encapsulated by a shell 90, such as a non-aqueous shell 90. A seasoning particle 10 of sea salt, having a particle size less than 25 microns, combined with a non-aqueous coating 20 may be encapsulated by a shell 90 of cooking oil. When applied to a surface with aqueous properties, the shell 90 of cooking oil may prevents a sea salt seasoning particle from dissociating and may preserve the integrity of the encapsulated seasoning particle 100 containing sea salt as a tastant. During consumption, the shell 90 of cooking oil may be ruptured and the sea salt seasoning particle 10 may be made available for taste impact. The sea salt seasoning may be natural or manmade, may be replaced with other flavored salts, natural or manmade, and/or a variety of other flavorings. It will be appreciated that the seasoning may consist of a variety of different seasonings, alone or in combination.

Large particle seasoning, having a size between 5 and 250 microns, and encapsulated seasoning particles 100, with a seasoning particle size less than 25 microns, may be mixed together. The encapsulated seasoning particle 100 and the large particle seasoning may include sodium chloride, potassium chloride, and sea salt. The large particle seasoning may or may not be encapsulated. The encapsulated seasoning particle 100 containing sea salt may be mixed with large encapsulated particles of sea salt seasoning. The encapsulating shell on the particles of sea salt prevents dissociation. The different sizes of the particles of salt allow for a relatively constant flavor impact because the small particles dissolve quicker and the larger particles dissolve slower.

An encapsulated seasoning particle 100 may be applied to a product using adhesion. For example, a coating, such as cooking oil, butter, or a non-nutritive oil, is first applied to a food, possibly through a pump or an aerosol spray. Sodium chloride, which may be the first encapsulated seasoning, may then be applied to the coating. The sodium chloride, with a particle size less than 25 microns or minus 500 U.S. mesh, may be included in the aerosol spray. The sodium chloride may be delivered as a suspension not only in cooking oil, but also in alcohol or some other non-polar solvent. One serving amount of sodium chloride from a salt shaker may contain approximately 1500 to 2000 mg of sodium chloride, while one serving amount of a sodium chloride suspension applied as an aerosol may contain approximately 300 to 400 mg of sodium chloride. It may be important that the sodium chloride be in a non-aqueous suspension so the sodium chloride does not dissociate until it reaches the palate.

The first seasoning component may be deposited at least partially around the second seasoning component. Deposition may occur via high shear granulation; fluid bed coating; spray drying; coacervation; physical vapor deposition, including plasma deposition and sputtering; chemical vapor deposition; or another suitable deposition technique. The second seasoning component may be fully encapsulated by the first seasoning component, or in the alternative, only a portion of the second seasoning component surface area may be covered by the first seasoning component. For example, in a seasoning particle, starch may be the core upon which sodium chloride is deposited. While sodium chloride may be located around the perimeter of the seasoning particle, saliva may quickly dissolve the salt into solution so that it may be tasted. Since starch comprises the core of the encapsulated seasoning particle, less sodium chloride may be ingested per encapsulated seasoning particle compared to an encapsulated seasoning particle solely comprised of sodium chloride. Even though the core may not impart a salty flavor, the rapidity of the dissolution of the salt may result in a relatively high perceived salt taste. Alternatively, starch and sodium chloride may be admixed or agglomerated into a discrete particle in a matrix form of morphology. In this manner, the saltiness perception may be lengthened or extended due to a separation of sodium chloride units by the starch. Thus, rather than a rapid dissolution, the sodium chloride may be dissolved upon breaking up of the agglomeration or admixture, resulting in a lengthened dissolution process and a longer lasting taste of sodium chloride.

Employing a core size of less than 25 microns, such as a particle size of 10 microns, may be essential to potentiating, enhancing, and maximizing the taste impact of the seasoning. While many theories about the mechanism by which chemicals elicit a specific taste sensation exist, most of these theories agree that tastants must be water soluble to be tasted. Taste cell receptors exist within taste buds grouped together on the human tongue. These receptors allow humans to detect differences in varying concentrations of materials. For example, taste cell receptors enable an individual to differentiate between a highly concentrated or saturated solution of sodium chloride dissolved in water and a significantly lesser amount of sodium chloride fully dissolved in water. A weight of sodium chloride comprising a small particle size provides more surface area than the same weight of sodium chloride comprising a larger particle size and the same crystal structure. Doubling the length of each side of a cube quadruples the surface area of the cube, but consumes eight times the volume. Alternatively, taking the same volume and decreasing the length of each side by half gives eight smaller cubes with a total of twice the amount of surface area available to the taste buds. This is important with regard to the dissolution process disclosed herein.

The rate at which a substance may be dissolved into solution is dependent on multiple factors. One such factor may be the surface area of the substance. When a substance is exposed to a solvent, the surface area in contact with the solvent may be termed the solvent exposed area. In general, the greater the solvent exposed area, the faster the dissolution of the substance. This particular dissolution property combined with the function of taste receptors may maximize the taste impact of seasoning, and particularly sodium chloride introduced with a second seasoning component.

Saliva may act as a solvent for tastants. Small particle sizes may be used to increase the solvent exposed area of the seasoning components. For example, a particular weight of sodium chloride having a particle size of 10 microns may dissolve into a given volume of saliva more rapidly than an identical weight of sodium chloride having a particle size of 250 microns, comprising the same crystal structure, and in an identical volume of saliva. After a short period of time, the 10 micron solution may have a higher concentration of dissolved sodium chloride than the 250 micron solution. Tasting response to sensory stimuli is rapid, usually occurring within 50 milliseconds. Thus, only a short amount of time may be allotted before a tastant elicits a response on the taste receptors. Therefore, by using a smaller particle size, the seasoning may dissolve into solution more rapidly and may elicit a larger taste impact than seasoning comprising a larger particle size.

A smaller particle size may elicit a larger taste impact of seasoning. Relative taste impact primarily is a function of tastant dissolution rate. As such, the amount of tastant required for a desired taste may become less critical for producing the desired taste. For example, while a large amount of coarse salt may produce a highly concentrated solution, it may take a significant portion of time, relative to the short time required for tasting, to achieve this high concentration. On the other hand, while a smaller amount of fine salt may not produce as concentrated a solution after the significant portion of time, it may achieve a higher concentration after a short period of time, due to the enhanced solubility. Thus, less fine salt may be required to produce a desired taste impact. Therefore, dietary sodium may be reduced by using smaller particle size sodium chloride without compromising the desired taste impact.

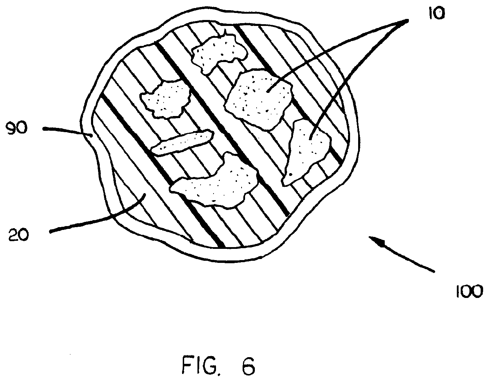

This result of reduced dietary sodium intake while retaining the desired impact may be supported by multiple views of the mechanism by which tastants elicit taste. For instance, this result may be supported by the lock and key view or the shallow contour view, which are similar to an enzyme/substrate relationship. Under these models, the relationship between the amount of seasoning consumed and the taste impact may be approximated by a simplified dose-response curve, as depicted in FIG. 6. According to these models, a normalized response may be of the form

$$response \propto \frac{1}{1+e^{-A}}$$

where A is the concentration of a tastant. Thus, a given response, such as taste impact on a taste receptor, is dependent upon the concentration of a tastant. A small particle size tastant, such as sodium chloride, will dissolve into saliva quickly, resulting in a more concentrated solution after a short period of time. A larger particle size of sodium chloride will dissolve into saliva more slowly and may result in a lower concentration solution in the same period of time. According to the simplified dose-response curve, the response will be higher for the smaller particle size solution after this short period of time. Response increases for increasing concentration on the simplified dose-response curve. Thus, taste impact increases for increasing concentration of tastant, according to these models.

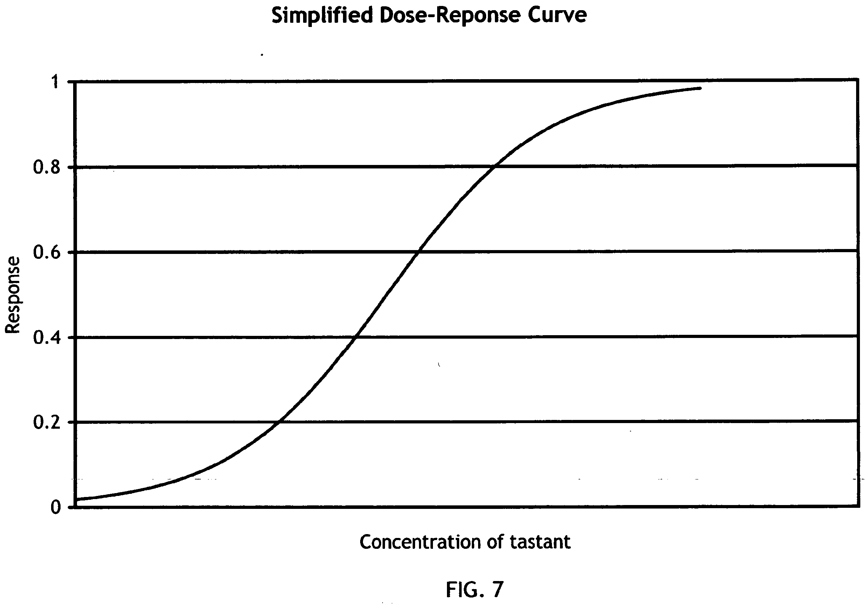

Retaining a desired taste impact may also be approximated by the chemical tastant-receptor interaction model. As explained above, tastes are differentiated by the symmetrical nature of the interactions, in which no chemical products are formed. Thus, the interactions of this model may be approximated by chemical reaction equations solely dependant upon the concentration of the tastant. As shown in FIG. 7, approximate concentration versus time curves for three reaction orders and two initial concentrations are depicted. FIG. 7 is a theoretical graph, where the units for concentration and time are dependant on a theoretical rate constant k, which differs for each reaction order. While no products are formed, the interaction between the chemical tastant and the receptor can be approximated as a product for the purposes of modeling. Also, since the taste receptor cells remain fixed and essentially unchanged by the interaction, the concentration of the tastant is the limiting factor of the reaction rate. So according to this model, the initial concentration of tastant is the driving force for the subsequent "reactions." Since the chemical tastant-receptor interaction model is theoretical, the reaction rate for the tasting "reaction" must also be approximated. FIG. 7 displays three possible reaction rates: zero order (rate is constant), first order (rate $\propto$ [A]), and second order (rate $\propto$ [A]$^2$), where [A] is the concentration of a chemical tastant, such as sodium chloride. These reaction curves are approximate and account for initial doses of tastant, rather than a slow dissolving process. Therefore, this approximation may be viewed in two ways. First, the tastants are given a short time to dissolve before interacting with taste receptors, where no additional tastants are allowed to dissolve. In this instance, smaller particle size seasoning, such as sodium chloride, will dissolve rapidly, resulting in a larger initial concentration when compared to larger mean particle solutions. When comparing like ordered reactions, the higher initial concentration remains at a higher level throughout the "reaction." Taste cell receptors can distinguish between varying concentrated solutions and may recognize this difference as a difference in taste impact. Second, the tastants are allowed to fully dissolve before interacting with the taste receptors. In this instance, where two different particle sizes are used, the initial concentration would remain the same if the same mass of tastants is used. There would be no difference in the concentrations of the two solutions over time. However, suppose less mass was used for the smaller particle size solution. In this case, the initial concentration would be less. For reaction orders greater than zero, the difference in concentrations between the smaller mean particle solution and the larger mean particle solution becomes smaller as time progresses. Therefore, the taste impact difference becomes less apparent to an individual with time. These two alternative ways to view this model support using less seasoning with smaller particle size. The smaller particle size will allow a higher concentration solution after a short period of time, and, with regard to total concentration, the difference between a higher concentration and a lower concentration becomes less evident over time (for reaction orders greater than zero). Therefore, less sodium chloride of a smaller particle size (e.g. 10 microns) may be used as a seasoning component, while maintaining the desired taste impact.

It is also foreseeable that sodium chloride or other seasoning particle structures other than a cubic crystal lattice may be utilized. For example, dendritic salt or salt produced from the Alberger process may be used. Dendritic salt may be produced in vacuum pans from chemically purified brine to which a crystal modifying agent is added. The resultant crystals are porous, star-shaped modified cubes. This structure ensures an even greater solvent exposed area, and thus better solubility than regular cubic crystalline structure. The Alberger process produces salt through mechanical evaporation and may use an open evaporating pan and steam energy. The resultant crystals are stairstep-like flakes with very low bulk density. This structure increases the solvent exposed area, and thus, has better solubility characteristics than regular cubic crystalline structure. Smaller amounts of these salt forms may be required than traditional amounts of salt to obtain the desired taste, due to the high solubility of these specialized forms. Additionally, the irregular shapes of these salt forms may enhance their ability to cling to surfaces, such as on foodstuffs.

The following examples are merely exemplary and are not necessarily restrictive of the disclosure.

EXAMPLES

EXAMPLE 1

This example presents an application of encapsulated microfine seasoning, such as salt, as a component of breadings or toppings for frozen or refrigerated foods. The encapsulated microfine seasoning can be applied in an aqueous suspension utilizing adhesion or added directly into the breading or topping. The food products may include poultry, red meat, fish, baked goods, vegetables, or other appetizers including potatoes, onions, or cheeses, and may contain seasoning, flour, wheat, cornmeal, nuts (tree or legumes), and/or soybeans. Processes may include frying, baking, roasting, partial or fully cooking, or extrusion. Specific examples may include breaded zucchini, mozzarella, mushrooms, or chicken, flavored or unflavored onion rings, potato products (i.e., french fries), pastry pie crumb topping, or breaded pasta (i.e., toasted ravioli).

EXAMPLE 2

This example presents an application of encapsulated microfine seasoning as a component for dry mix breadings for the covering of food products. The encapsulated microfine seasoning can be applied directly as a part of the breading. The food products may include poultry, red meat, fish, baked goods, vegetables, or other appetizers including potatoes, onions, or cheeses, and may contain seasoning, flour, wheat, cornmeal, nuts (tree or legumes), or soybeans. Processes may include frying, baking, roasting, partial or fully cooking, or extrusion. A specific example includes SHAKE 'N BAKE®, manufactured by Kraft Foods, Inc.

EXAMPLE 3

This example presents an application of encapsulated microfine seasoning as a component in a seasoning blend for a topical application. The encapsulated seasoning can be added to the food as part of an aqueous suspension using adhesion principles. The food products may include poultry, red meat, fish, baked goods, vegetables, or other appetizers including potatoes, onions, or cheeses (topical or non-aqueous). The topical application may include seasonings or bulking agents. A specific example may include seasoning salt.

EXAMPLE 4

This example presents an application of encapsulated microfine seasoning as a component in cured and non-cured dried meats as a topical additive. The encapsulated seasoning can be added to the food as part of an aqueous suspension using adhesion principles. The meats may include beef, bacon, or bacon-flavored mimics. The dried meats may be dried, freeze-dried, extruded or baked. A specific example includes bacon bits.

EXAMPLE 5

This example presents an application of encapsulated microfine seasoning as a component in non-snack, cereal-based food compliments. The encapsulated microfine seasoning can be added as part of an aqueous suspension or directly to the cereal-based food. The cereal-based food compliments may include bread, wheat, corn, oats, millet, rye, soybeans, cornmeal, seasoning, nuts (tree or legumes), or rice, and may be processed by baking, frying, extruding, puffing, drying, or may be left unprocessed. Specific examples may include croutons or bread crumbs.

EXAMPLE 6

This example presents an application of encapsulated microfine seasoning as a direct addition to natural and artificial spreads. The natural or artificial spreads may contain nuts (tree or legumes), nut ingredients, soybeans, or seeds. Specific examples may include hazelnut spread, soy butter, or peanut butter.

EXAMPLE 7

This example presents an application of encapsulated microfine seasoning for use as a direct addition or part of articles in aqueous batters. The batters may include edible fats and oils, flour, salt, seasoning, wheat, corn, cornmeal, nuts (tree or legume), or soybeans. Specific examples include potato wedges, onion rings, fish, and cheese sticks.

EXAMPLE 8

This example presents an application of encapsulated microfine seasoning for use as a direct addition to prepared pie crusts. The encapsulated microfine seasoning may be added directly to the pie crust mix as part of an aqueous suspension. The pie crusts may contain seasoning, flour, wheat, corn, cornmeal, nuts (trees or legumes), or soybeans. A specific example is a graham cracker pie crust.

EXAMPLE 9

This example presents an application of encapsulated microfine seasoning added to a dried, grated, or shredded cheese for topical use. The encapsulated microfine seasoning may be directly added to the cheese or as a part of an aqueous suspension. The cheese may be dried or dehydrated. Specific examples include parmesan, romano, asiago, or other dried, grated or, shredded cheeses with salt and other ingredients.

EXAMPLE 10

This example presents an application for the direct addition of encapsulated microfine seasoning into water-based products. The microfine seasoning may be added as a component in a non-aqueous suspension. The lipid based products may be natural, conditioned, de-gummed, stabilized, deodorized, homogenized, bleached, or winterized. Uses may include confectionary aqueous fillings, sprays, liquid or solid edible flavorings.

Specific examples may include Oreo filling, manufactured by Nabisco.

EXAMPLE 11

This example presents an application of encapsulated microfine seasoning as an application for cereals and cereal bars. The encapsulated microfine seasoning may be added directly to the cereal or cereal bars or as a part of an aqueous suspension. The cereal or cereal bars may include bread, wheat, corn, oat, millet, rye, soybeans, cornmeal, seasoning, nuts (tree or legumes), rice, or granola processed by baking, extruding, roasting, toasting, frying, drying, pressing, forming, or puffing. Specific examples may include any type of breakfast cereal, or any type of granola bar that is aqueous in nature.

EXAMPLE 12

This example presents a topical application of encapsulated microfine seasoning for vegetables and fruits. The encapsulated microfine seasoning is added directly to the vegetables and fruits. The vegetables and fruits may be freeze-dried or processed other ways. A specific example is Gerber freeze-dried sweet corn for babies, manufactured by the Gerber Products Company.

EXAMPLE 13

This example presents a topical application of encapsulated microfine seasoning for snack foods. The encapsulated microfine seasoning may be added directly to the snack food or as a part of an aqueous suspension. The snack foods can contain rice, oats, corn, soybeans, wheat, cornmeal, flour, seasoning, potato, rye, millet, or nuts (tree and legumes). The snack foods can be flavored and unflavored snack crackers, crisps, cakes, mixes, chips, shells, cookies, crackers, pork rinds, and can be toasted, roasted, baked, fried, extruded, puffed, and the like. Specific examples include potato chips (i.e. Pringles, manufactured by Procter & Gamble), Chex mix, manufactured by General Mills, Inc., pork rinds, corn chips, popcorn, soy or rice cakes, popcorn that is microwavable or ready-to-eat, saltines, Chips Ahoy cookies, manufactured by Nabisco, bagel chips, pita chips, Planters peanuts, manufactured by Kraft Foods Global, Inc., and the like.

**Claims**

1. A microcapsule of seasoning, comprising:

   a core, the core comprising at least one salt particle and a non-aqueous composition, wherein the salt particle comprises a particle size less than 25 microns and the non-aqueous composition surrounds or encapsulates the at least one salt particle, forms a suspension comprising the at least one salt particle, or forms a matrix comprising the at least one salt particle; and

a first shell encapsulating the core.

2. The microcapsule of seasoning of claim 1, wherein the core comprises at least one of sodium chloride, potassium chloride, a bulking agent, a bitterness masking agent, or sea salt.

3. The microcapsule of seasoning of claim 2, wherein the bulking agent comprises a starch or a starch derivative.

4. The microcapsule of seasoning of any one of claims 1 to 3, wherein the first shell is at least partially encapsulated by a second shell, and optionally the second shell is at least partially encapsulated by a third shell.

5. The microcapsule of seasoning of claim 4, wherein the first shell or second shell is at least one of oil, fat, or a hydrophobic compound.

6. The microcapsule of seasoning of claim 1, wherein the core is an oil/salt particle slurry encapsulated by gelatin, proteins, carbohydrates, oils and/or fats.

7. The microcapsule of seasoning of any one of claims 1 to 6, wherein the at least one salt particle comprises a particle size of 10 microns.

8. The microcapsule of seasoning of any one of claims 1 to 7, wherein the salt particle is sodium chloride, potassium chloride, or sea salt.

9. The microcapsule of seasoning of any one of claims 1 to 8, wherein the core is mononuclear.

10. The microcapsule of seasoning of any one of claims 1 to 8, wherein the core is polynuclear.

11. A food seasoning, comprising one or more microcapsules of seasoning according to any one of claim 1 to 10.

12. The food seasoning of claim 11, further comprising a spice or flavorant selected from sugar, pepper, cumin, thyme, paprika, nutmeg, chili powder, basil, ginger, garlic, tumeric, coriander, lemon pepper, curry, cilantro, or all spice.

13. The food seasoning of claim 11 or claim 12, when dependent on claim 10, comprising a plurality of microcapsules suspended in a non-aqueous liquid medium comprising an oil, alcohol, or non-polar solvent.

14. A method for seasoning a food product, comprising:

selecting a food product;

selecting one or more microcapsules according to any one of claims 1 to 10 or a food seasoning according to any one of claims 11 to 13; and dispersing the selected microcapsules of seasoning or the selected food seasoning on the food product.

**Patentansprüche**

1. Eine Würzmittel-Mikrokapsel, die Folgendes beinhaltet:

einen Kern, wobei der Kern mindestens ein Salzpartikel und eine nichtwässrige Zusammensetzung beinhaltet, wobei das Salzpartikel eine Partikelgröße von weniger als 25 Mikrometer beinhaltet und die nichtwässrige Zusammensetzung den mindestens einen Salzpartikel umgibt oder verkapselt, eine Suspension bildet, die das mindestens eine Salzpartikel beinhaltet, oder eine Matrix bildet, die das mindestens eine Salzpartikel beinhaltet; und

eine erste Hülle, die den Kern verkapselt.

2. Würzmittel-Mikrokapsel nach Anspruch 1, wobei der Kern mindestens eines von Natriumchlorid, Kaliumchlorid, einem Füllstoff, einem bitteren Geschmack maskierenden Stoff oder Meersalz beinhaltet.

3. Würzmittel-Mikrokapsel nach Anspruch 2, wobei der Füllstoff eine Stärke oder ein Stärkederivat beinhaltet.

4. Würzmittel-Mikrokapsel nach einem der Ansprüche 1 bis 3, wobei die erste Hülle mindestens teilweise durch eine zweite Hülle verkapselt wird und wobei die zweite Hülle optional mindestens teilweise durch eine dritte Hülle verkapselt wird.

5. Würzmittel-Mikrokapsel nach Anspruch 4, wobei die erste Hülle oder zweite Hülle mindestens eines von Öl, Fett oder einer hydrophoben Verbindung ist.

6. Würzmittel-Mikrokapsel nach Anspruch 1, wobei der Kern eine Öl/Salzpartikel-Aufschlämmung ist, die durch Gelatine, Proteine, Kohlenhydrate, Öle und/oder Fette verkapselt ist.

7. Würzmittel-Mikrokapsel nach einem der Ansprüche 1 bis 6, wobei das mindestens eine Salzpartikel eine Partikelgröße von 10 Mikrometer beinhaltet.

8. Würzmittel-Mikrokapsel nach einem der Ansprüche 1 bis 7, wobei das Salzpartikel Natriumchlorid, Kaliumchlorid oder Meersalz ist.

9. Würzmittel-Mikrokapsel nach einem der Ansprüche 1 bis 8, wobei der Kern einkernig ist.

10. Würzmittel-Mikrokapsel nach einem der Ansprüche 1 bis 8, wobei der Kern mehrkernig ist.

11. Ein Nahrungswürzmittel, das eine oder mehrere Würzmittel-Mikrokapseln nach einem der Ansprüche 1 bis 10 beinhaltet.

12. Würzmittel nach Anspruch 11, das ferner ein Gewürz oder einen Geschmacksstoff beinhaltet, der aus Zucker, Pfeffer, Kreuzkümmel, Thymian, Paprika, Muskatnuss, Chillipulver, Basilikum, Ingwer, Knoblauch, Gelbwurz, Koriandersamen, Zitronenpfeffer, Curry, Koriandergrün, oder Piment ausgewählt ist.

13. Nahrungswürzmittel nach Anspruch 11 oder Anspruch 12 bei Abhängigkeit von Anspruch 10, das eine Vielzahl von Mikrokapseln beinhaltet, die in einem nichtwässrigen flüssigen Medium suspendiert sind, das ein Öl, Alkohol, oder nichtpolares Lösungsmittel beinhaltet.

14. Ein Verfahren zum Würzen eines Nahrungsmittels, das Folgendes beinhaltet:

Auswählen eines Nahrungsmittels;
Auswählen einer oder mehrerer Mikrokapseln nach einem der Ansprüche 1 bis 10 oder eines Nahrungswürzmittels nach einem der Ansprüche 11 bis 13; und
Dispergieren der ausgewählten Würzmittel-Mikrokapseln oder des ausgewählten Nahrungswürzmittels auf dem Nahrungsmittel.

**Revendications**

1. Microcapsule d'assaisonnement, comprenant :

un noyau, le noyau comprenant au moins une particule de sel et une composition non aqueuse, dans lequel la particule de sel a une taille de particule inférieure à 25 microns et la composition non aqueuse entoure ou encapsule ladite au moins une particule de sel, forme une suspension comprenant ladite au moins une particule de sel, ou forme une matrice comprenant ladite au moins une particule de sel ; et
une première enveloppe encapsulant le noyau.

2. Microcapsule d'assaisonnement selon la revendication 1, dans laquelle le noyau comprend au moins l'un du chlorure de sodium, du chlorure de potassium, d'un agent de masse, d'un agent masquant l'amertume, ou du sel de mer.

3. Microcapsule d'assaisonnement selon la revendication 2, dans laquelle l'agent de masse comprend un amidon ou un dérivé d'amidon.

4. Microcapsule d'assaisonnement selon l'une quelconque des revendications 1 à 3, dans laquelle la première enveloppe est au moins en partie encapsulée par une deuxième enveloppe, et optionnellement la deuxième enveloppe est au moins en partie encapsulée par une troisième enveloppe.

5. Microcapsule d'assaisonnement selon la revendication 4, dans laquelle la première enveloppe ou la deuxième enveloppe est au moins l'une d'une huile, d'une graisse, ou d'un composé hydrophobe.

6. Microcapsule d'assaisonnement selon la revendication 1, dans laquelle le noyau est une suspension d'huile/de particules de sel encapsulée par de la gélatine, des protéines, des glucides, des huiles et/ou des graisses.

7. Microcapsule d'assaisonnement selon l'une quelconque des revendications 1 à 6, dans laquelle ladite au moins une particule de sel a une taille de particule de 10 microns.

8. Microcapsule d'assaisonnement selon l'une quelconque des revendications 1 à 7, dans laquelle la particule de sel se compose de chlorure de sodium, de chlorure de potassium, ou de sel de mer.

9. Microcapsule d'assaisonnement selon l'une quelconque des revendications 1 à 8, dans laquelle le noyau est mononucléaire.

10. Microcapsule d'assaisonnement selon l'une quelconque des revendications 1 à 8, dans laquelle le noyau est polynucléaire.

11. Assaisonnement alimentaire comprenant une ou plusieurs microcapsules d'assaisonnement selon l'une quelconque des revendications 1 à 10.

12. Assaisonnement alimentaire selon la revendication 11, comprenant en outre une épice ou un aromatisant sélectionné(e) parmi le sucre, le poivre, le cumin, le thym, le paprika, la noix de muscade, la poudre de piment, le basilic, le gingembre, l'ail, le curcuma, la coriandre, le poivre au citron, le curry, le cilantro, ou le piment de la Jamaïque.

13. Assaisonnement alimentaire selon la revendication 11 ou la revendication 12, lorsque celles-ci sont dépendantes de la revendication 10, comprenant une pluralité de microcapsules en suspension dans un milieu liquide non aqueux comprenant une huile, un alcool, ou un solvant non polaire.

**14.** Procédé d'assaisonnement d'un produit alimentaire, comprenant :

la sélection d'un produit alimentaire ;
la sélection d'une ou plusieurs microcapsules selon l'une quelconque des revendications 1 à 10 ou d'un assaisonnement alimentaire selon l'une quelconque des revendications 11 à 13 ; et
la dispersion des microcapsules d'assaisonnement sélectionnées ou de l'assaisonnement alimentaire sélectionné sur le produit alimentaire.

FIG. 1

FIG. 2

FIG. 3

FIG. 4

FIG. 5

FIG. 6

## Simplified Dose-Reponse Curve

Concentration of tastant

FIG. 7

EP 2 081 447 B1

Concentration vs. Time for Various Reaction Orders

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050191389 A
- US 4385076 A
- US 20060088649 A
- US 6159529 A